# EUROPÄISCHE PATENTSCHRIFT

(11) **EP 4 252 504 B1**
(45) Veröffentlichungstag und Bekanntmachung des Hinweises auf die Patenterteilung: **02.12.2026**
(21) Anmeldenummer: 23164235.6
(22) Anmeldetag: 27.03.2023
(51) Int. Cl.: A01B 63/00, A01B 63/02, B60B 35/02, B60B 35/10

(54) **VERSTELLACHSE**
ADJUSTMENT AXLE
AXE DE RÉGLAGE

(30) Priorität: 29.03.2022 DE 102022107359
(43) Veröffentlichungstag der Anmeldung: 04.10.2023
(73) Patentinhaber: Lemken GmbH & Co KG, 46519 Alpen (DE)
(72) Erfinder: Götzen, Nils, 47443 Moers (DE); Beier, Carsten, 33154 Salzkotten (DE)

(56) Entgegenhaltungen:
- EP-A1- 2 384 908
- US-A- 5 464 243
- US-A1- 2015 291 233

## Beschreibung

Die vorliegende Erfindung betrifft eine landwirtschaftliche Arbeitsmaschine, insbesondere zur Anlage, Bearbeitung und Pflege von landwirtschaftlichen Reihenkulturen, gemäß dem Oberbegriff des Anspruches 1.

Landwirtschaftliche Arbeitsmaschinen, die von Zugfahrzeugen gezogen werden, sind zur Einhaltung einer zulässigen Breite für das Führen im allgemeinen Straßenverkehr zusammenklappbar ausgeführt. So sind beispielsweise bei einer Feldspritze die Ausbringausleger zusammenklappbar, sodass die im Straßenverkehr zulässige Breite von 3 m nicht überschritten wird. Die landwirtschaftliche Arbeitsmaschine umfasst einen Maschinenrahmen, an dem ein Fahrwerk mit einer längenveränderlichen Radachse befestigt ist. Zur Einhaltung der im Straßenverkehr zulässigen Transportbreite ist die längenveränderliche Radachse, an der Räder angeordnet sind, eingezogen. Im Feldbetrieb wird die Radachse ausgefahren, um diese an eine Spurbreite im Bestand anzupassen, damit die Räder zwischen Anpflanz- oder Pflanzenreihen laufen. Insbesondere der bei der Bodenbearbeitung häufig vorkommende Einsatz einer Doppelbereifung, welche in ihrer Spur rechts und links neben einer Saat- oder Pflanzenreihe angeordnet sind, ist die Anpassung des Radabstands durch die längenveränderliche Radachse notwendig.

Hierzu weist die längenveränderliche Radachse ein Achsrohr auf, in welchem endseitig angeordnete Achsstummel mit daran angeordneten Radnaben in axialer Richtung relativbeweglich geführt und durch Gleitelemente gelagert sind, wobei zur Verstellung der Achsstummel gegenüber dem Achsrohr Linearaktoren vorgesehen sind. Derartige Verstellmechanismen sind aus der US 2015 291 233 A1 und der EP 2 384 908 A1 bekannt.

Es ist bekannt, eine längenveränderliche Radachse mit einem quaderförmigen Achsrohr und darin angeordneten Achsstummeln vorzusehen, die jeweils durch im Inneren der Radachse oder außenseitig angeordnete Linearaktoren gegenüber dem Achsrohr in axialer Richtung relativbeweglich sind. Dabei treten in Abhängigkeit von der Anordnung der Linearaktoren an der Radachse sowie der Anordnung der Gleitelemente Nachteile auf, die Einfluss auf die Dimensionierung der Radachse und der Linearaktoren sowie den Verschleiß der Gleitelemente haben. So ist eine innenliegende Anordnung der Linearaktoren hinsichtlich Montage und Wartung sehr aufwendig. Eine seitliche Anbringung der Linearaktoren führt mit zunehmendem Abstand zum Achsrohr zu hohen Verspannungen, was die Dimensionierung der Radachse und der Linearaktoren beeinflusst. So müssen beim Einfahren der Achsstummel höhere Einfahrkräfte berücksichtigt werden, die von den Linearaktoren aufzubringen sind.

Ausgehend vom vorstehend genannten Stand der Technik liegt der Erfindung die Aufgabe zugrunde, eine landwirtschaftliche Arbeitsmaschine der eingangs genannten Art weiterzubilden, welche die Nachteile des Standes der Technik vermeidet.

Diese Aufgabe wird durch eine landwirtschaftliche Arbeitsmaschine mit den Merkmalen des unabhängigen Patentanspruchs 1 gelöst. Vorteilhafte Ausführungsformen und Weiterbildungen sind den hiervon abhängigen Ansprüchen zu entnehmen.

Gemäß dem Anspruch 1 wird eine landwirtschaftliche Arbeitsmaschine, insbesondere zur Anlage, Bearbeitung und Pflege von landwirtschaftlichen Reihenkulturen, umfassend einen Maschinenrahmen, an dem ein Fahrwerk mit einer längenveränderlichen Radachse befestigt ist, vorgeschlagen, wobei die Radachse ein Achsrohr aufweist, in welchem endseitig angeordnete Achsstummel mit daran angeordneten Radnaben in axialer Richtung relativbeweglich geführt und gleitend gelagert sind, wobei zur Verstellung der Achsstummel gegenüber dem Achsrohr Linearaktoren vorgesehen sind, wobei jeder Achsstummel eine zumindest einseitig zentrierende Außenkontur mit Zentrierflächen aufweist, die sich an Zentrierflächen einer korrespondierenden Innenkontur des Achsrohres abstützen, wobei an den Zentrierflächen der Innenkontur des Achsrohres Gleitelemente angeordnet sind. Erfindungsgemäß ist vorgesehen, dass die an den Zentrierflächen der Innenkontur des Achsrohres angeordneten Gleitelemente durch im Wesentlichen senkrecht zu den Zentrierflächen bewegliche oder orientierte Einstellmittel einstellbar sind. Durch die zumindest einseitig zentrierende Außenkontur des jeweiligen Achsstummels und die korrespondierende Innenkontur des Achsrohres erhält der Achsstummel mehr Stabilität in Belastungsrichtung, was eine Vergrößerung der Auskragung ermöglicht.

Die zwischen den Zentrierflächen angeordneten Gleitelemente sind dabei im Wesentlichen rollen- oder plattenförmig ausgeführt, um die zwischen Achsrohr und Achsstummelauftretende Gleitreibung zu reduzieren. Bevorzugt können die Gleitelemente aus einem Kunststoff, beispielsweise Polyamid, bestehen.

Mittels der einstellbaren Gleitelemente kann die Radachse spielfrei eingestellt werden. Dabei kann die Zustellung des Einstellmittel direkt oder mittels einer Umlenkung indirekt in eine senkrechte Bewegung zu den Zentrierflächen erfolgen.

Insbesondere können die an den Zentrierflächen des Achsrohres angeordneten Gleitelemente entlang einer senkrecht zur Zentrierfläche orientierten Einstellachse verstellbar sein, wobei die Einstellachsen in gedachter Verlängerung einen gemeinsamen Schnittpunkt aufweisen, der im Wesentlichen in der Mitte des Achsrohres liegt. Durch die senkrecht zur Zentrierfläche orientierte Einstellachse wird eine Einstellung der Position des Achsstummels relativ zum umgebenden Achsrohr zugleich in horizontaler als auch vertikaler Richtung bewirkt.

Weiter bevorzugt können die Innenkontur des Achsrohres und die Außenkontur der Achsstummel einen polygonalen und/oder einen bogenförmigen Querschnitt aufweisen, wobei sich zwei einander gegenüberliegende Seitenflächen der Innenkontur bzw. der Außenkontur, welche die jeweiligen Zentrierflächen bilden, eine Neigung zueinander aufweisen, die ungleich oder zumindest 90°, insbesondere größer 90°, ist. Im Falle eines bogenförmigen Querschnittes bilden jeweils an den Bogen im mittleren Bereich der Gleitelemente angelegte Tangenten den die Neigung.

Insbesondere kann die Innenkontur und die korrespondierende Außenkontur im Bereich der Zentrierflächen im Wesentlichen dreieckförmig, trapezförmig oder bogenförmig ausgebildet sein.

Des Weiteren können Mittellängsachsen von Achsrohr und Achsstummeln im Wesentlichen deckungsgleich übereinanderliegen. Dadurch wird erreicht, dass beim Bremsen die Erzeugung eines zusätzlichen Moments minimiert wird, welches ansonsten durch einen Achsversatz entstehen würde.

Bevorzugt können die die Linearaktoren als Hydraulikzylinder ausgeführt sein, welche außenseitig an dem Achsrohr und dem Achsstummel angeordnet sind. Durch die außenseitige Anordnung wird eine vereinfachte Montage ermöglicht. Hierbei können die Hydraulikzylinder als doppeltwirkende Hydraulikzylinder oder als Gleichlaufzylinder ausgeführt sein.

Vorteilhaft ist es, wenn die Linearaktoren an der den Zentrierflächen gegenüberliegenden Seite des Achsrohres angeordnet sind. Durch die Anordnung der Linearaktoren der den Zentrierflächen gegenüberliegenden Seite des Achsrohres, d.h. Unterseite der Radachse, wird ein Verspannen der Radachse beim Einfahren minimiert, so dass die Linearaktoren kleiner dimensionierbar sind. Bei als Hydraulikzylindern ausgeführten Linearaktoren können gegenüber dem Stand der Technik kleinere und somit günstigere Hydraulikzylinder montiert werden.

Bevorzugt kann der jeweilige Linearaktor mittels jeweils einer am Achsstummel und am Achsrohr angeordneten Konsole an diesen befestigt sein. Die Konsolen ermöglichen eine Positionierung der Linearaktoren im Wesentlichen achsparallel zur Mittellängsachse des Achsrohres.

Weiter bevorzugt kann genau eine Konsole im Wesentlichen mittig an dem Achsrohr angeordnet sein, an welcher beide Linearaktoren insbesondere mit ihrem Kolbengehäuse befestigt sind.

Hierbei kann die genau eine Konsole als Lochleiste ausgeführt sein. Hierdurch lassen sich die Linearaktoren mit unterschiedlichem axialen Versatz zueinander anordnen, um die Auskragung zu verändern. Alternativ kann die Lochleiste den Linearaktoren zugeordnet sein. Zudem können Linearaktoren mit unterschiedlichem Hub verwendet werden, um unterschiedliche Auskragungen zu realisieren.

Insbesondere kann an einer den Zentrierflächen gegenüberliegenden Seite der Achsstummel zumindest ein weiteres Gleitelement am Achsrohr und/oder an dem Achsstummel lösbar befestigt sein. Das zumindest eine weitere Gleitelement ist durch wenigstens eine Schraub- oder Formschlussverbindung mit dem Achsrohr und/oder dem Achsstummel verbunden.

Dabei kann ein im Wesentlichen U-förmiger Befestigungsabschnitt den Achsstummel umgreifen, an dessen dem Achsrohr zugewandten Unterseite das zumindest eine weitere Gleitelement lösbar befestigt ist. Der Befestigungsabschnitt erstreckt sich dabei abschnittsweise in axialer Richtung des Achsstummels. Weiterhin können an vertikalen Schenkeln des Befestigungsabschnittes außenseitig Gleitelemente, insbesondere lösbar, angeordnet sein. Insbesondere kann mittels der wenigstens einen Schraubverbindung zugleich der Befestigungsabschnitt am Achsstummel befestigt sein.

Bevorzugt kann der Befestigungsabschnitt am freien Ende des Achsstummels, insbesondere im Wesentlichen bündig mit diesem abschließend, angeordnet sein. Hierdurch kann ein Verkanten beim Einfahren und Ausfahren vermieden werden.

Bevorzugt können die Achsstummel einen Grundkörper mit einem im Wesentlichen quaderförmigen Querschnitt aufweisen, auf welchen ein im Wesentlichen polygonförmiges oder bogenförmiges Profilbauteil aufgeschweißt ist, dessen der Innenkontur des Achsrohres zugewandten Seitenflächen die Zentrierflächen ausbilden. Der Grundkörper kann aus zwei im Wesentlichen U-förmigen Abschnitten bestehen, die spiegelbildlich aufeinanderliegend angeordnet und durch in Längsrichtung verlaufende Schweißverbindungen miteinander verbunden sind. Eine konstruktive Anpassung des Grundkörpers der Achsstummel kann somit entfallen, wodurch die Fertigung des Aschstummels vereinfacht wird.

Weiter bevorzugt kann das Achsrohr als mehrteilige Schweißkonstruktion ausgeführt sein, welche aus einer im Wesentlichen U-förmigen Wanne und einem im Wesentlichen polygonförmigen oder bogenförmigen Aufsatz besteht. Die Form des Aufsatzes bestimmt sich dabei nach der Ausführung des Profilbauteils, welches auf den Grundkörper des Achsstummels aufgeschweißt ist.

Gemäß einer Weiterbildung können die Linearaktoren in ihrem axialen Verstellweg durch ein diesen zugeordnetes Begrenzungsmittel beschränkt sein. Als Begrenzungsmittel können gemäß einer einfachen Ausgestaltung Seile, Ketten oder Endanschläge am Fahrwerk vorgesehen sein, die mit dem jeweiligen Linearaktor zusammenwirken.

Vorzugsweise kann für ein symmetrisches Ausfahren der Linearaktoren ein Zwangslauf vorgesehen sein, welcher insbesondere als gegenläufiges Hebel-Gestänge, als Zahnstangenmechanismus oder als hydraulischen Gleichlaufeinrichtung ausgebildet sein kann.

Die vorliegende Erfindung wird nachstehend anhand eines in den Zeichnungen dargestellten Ausführungsbeispiels näher erläutert.

Es zeigen:
- Fig. 1: eine schematische Darstellung einer von einem Zugfahrzeug gezogenen landwirtschaftlichen Arbeitsmaschine;
- Fig. 2: eine perspektivische Darstellung der landwirtschaftlichen Arbeitsmaschine gemäß Fig. 1;
- Fig. 3: eine Ansicht einer längenveränderlichen Radachse der Arbeitsmaschine in eingefahrenen Stellung;
- Fig. 4: eine Ansicht der längenveränderlichen Radachse gemäß Fig. 3 in ausgefahrenen Stellung;
- Fig. 5: eine perspektivische Ansicht eines Achsstummels der Radachse;
- Fig. 6: eine Schnittansicht entlang der Linie VI -VI gemäß Fig. 3; und
- Fig. 7: eine vergrößerte Ansicht der Darstellung gemäß Fig. 6.

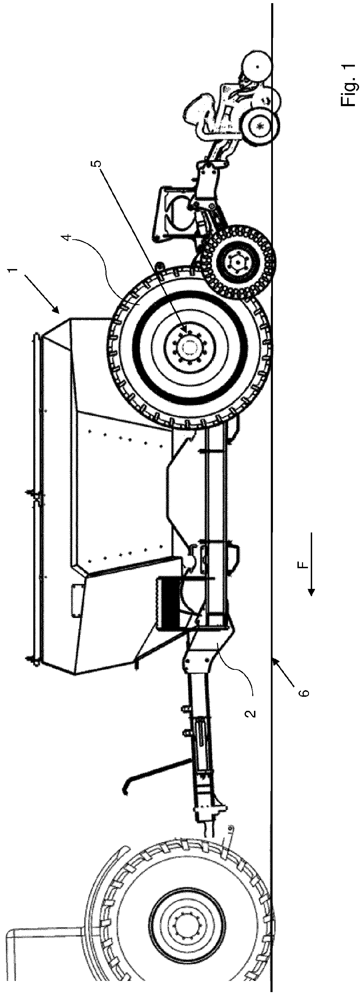

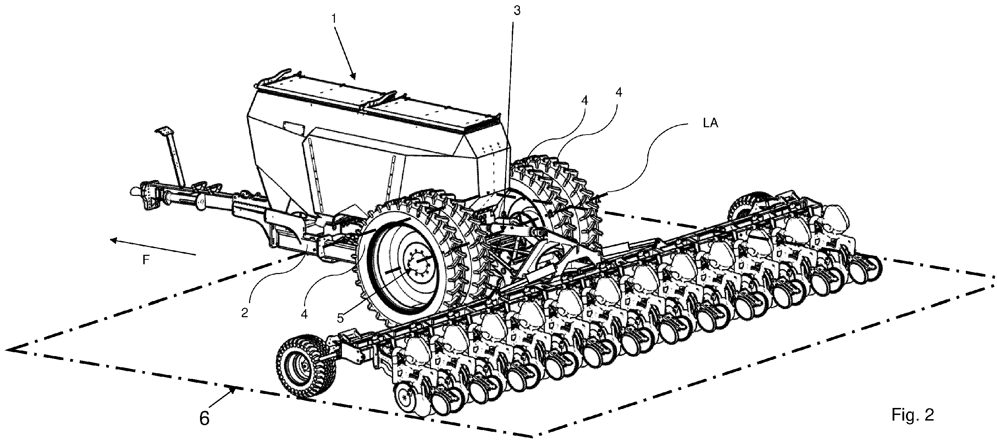

In Fig. 1 ist eine schematische Darstellung einer von einem Zugfahrzeug gezogenen landwirtschaftlichen Arbeitsmaschine 1 gezeigt. Durch das Zugfahrzeug wird die landwirtschaftliche Arbeitsmaschine 1 in Fahrtrichtung F bewegt. Die landwirtschaftliche Arbeitsmaschine 1 ist insbesondere zur Anlage, Bearbeitung und Pflege von landwirtschaftlichen Reihenkulturen eingerichtet. Beispielsweise kann die landwirtschaftliche Arbeitsmaschine 1 als Feldspritze, Sämaschine, Hackmaschine oder dergleichen ausgeführt sein. Hierzu sind an der Arbeitsmaschine entsprechende Arbeitswerkzeuge oder Ausbringeinrichtungen angeordnet. Die Arbeitsmaschine 1 umfasst einen Maschinenrahmen 2, an dem ein Fahrwerk 3 mit Rädern 4 angeordnet sind. Für den Einsatz auf einem zu bearbeitenden Feld 6 ist es oftmals notwendig, zur Reduzierung des Bodendrucks das Fahrwerk 3 mit einer Doppelbereifung auszustatten, wie in Fig. 2 dargestellt.

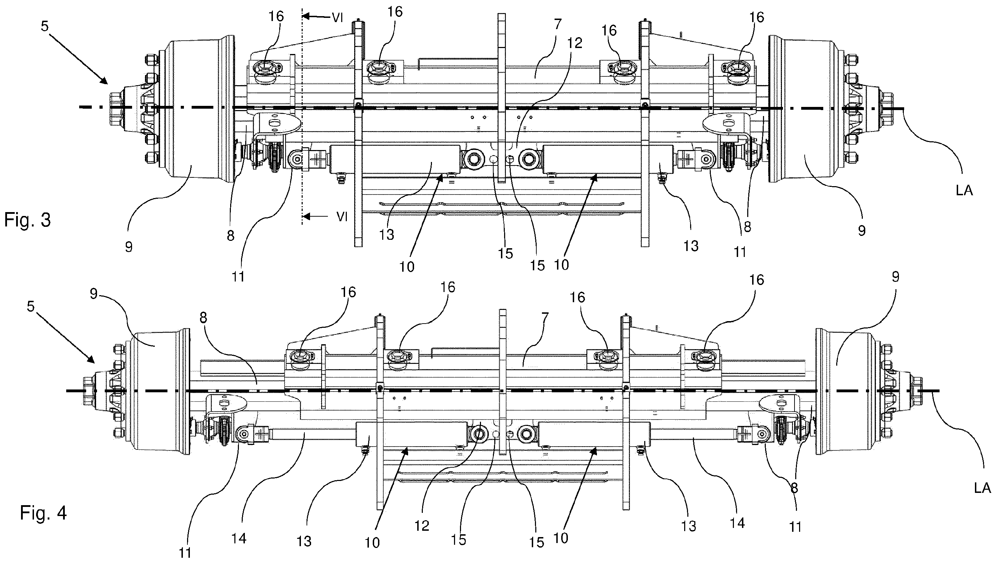

Fig. 2 zeigt eine perspektivische Darstellung der landwirtschaftlichen Arbeitsmaschine 1 gemäß Fig. 1. An dem Fahrwerk 2 ist eine längenveränderliche Radachse 5 befestigt. Die längenveränderliche Radachse 5 wird unter Bezugnahme auf die nachfolgenden Figuren 3 bis 7 näher erläutert. Mit dem Bezugszeichen LA ist eine Längsachse der Radachse 5 bezeichnet. Mit Blick auf die anzulegenden oder zu bearbeitenden Reihenkulturen können jeweils Doppel- bzw. Zwillingsräder an der Radachse 5 angeordnet werden. Diese sind so weit voneinander beabstandet, dass eine dazwischenliegende Saat- oder Kulturpflanzenreihe nicht überfahren wird.

In Fig. 3 ist eine Ansicht der längenveränderlichen Radachse 5 der Arbeitsmaschine 1 in eingefahrener Stellung dargestellt. Die Radachse 5 weist ein Achsrohr 7 auf, in welchem endseitig angeordnete Achsstummel 8 mit daran angeordneten Radnaben 9 in axialer Richtung relativbeweglich geführt sind. Zur Verstellung der Achsstummel 8 gegenüber dem Achsrohr 7 sind Linearaktoren 10 vorgesehen. Die Linearaktoren 10 lassen sich ansteuern, um die Achsstummel 8 mit den daran angeordneten Rädern 4 einzuziehen, um eine für den Transport auf einer öffentlichen der Straße zulässige Transportbreite von 3 m durch das Zugfahrzeug einzuhalten. Die Darstellung in Fig. 4 zeigt eine Ansicht der längenveränderlichen Radachse 5 gemäß Fig. 3 in ihrer ausgefahrenen Stellung. Bevorzugt sind die Linearaktoren 10 als doppeltwirkende Hydraulikzylinder ausgeführt. Bevorzugt können die Linearaktoren 10 in ihrem axialen Verstellweg durch ein diesen zugeordnetes - nicht dargestelltes - Begrenzungsmittel beschränkt sein. Als Begrenzungsmittel können gemäß einer einfachen Ausgestaltung Seile, Ketten oder Endanschläge am Fahrwerk 3 vorgesehen sein, die mit dem jeweiligen Linearaktor 10 zusammenwirken

Der jeweilige Linearaktor 10 ist mittels jeweils einer am Achsstummel 8 und am Achsrohr 7 angeordneten Konsole 11, 12 an diesen befestigt. Die Konsolen 11 sind am jeweiligen Achsstummel 7 angeordnet. An den Konsolen 11 ist eine Kolbenstange 14 des jeweils als Hydraulikzylinder ausgeführten Linearaktors 10 endseitig lösbar befestigt. Zur lösbaren Befestigung kann beispielsweise eine Schraubverbindung oder eine Bolzenverbindung vorgesehen sein.

Weiterhin ist genau eine Konsole 12 im Wesentlichen mittig an dem Achsrohr 7 angeordnet, an welcher beide Linearaktoren 10 mit ihrem Kolbengehäuse 13 endseitig befestigt sind. Die genau eine Konsole 12 ist bevorzugt als eine Lochleiste ausgeführt, welche mehrere äquidistant angeordnete Öffnungen 15 aufweist. Hierdurch lassen sich die Linearaktoren 10 mit unterschiedlichem axialen Versatz zueinander anordnen, um die Auskragung zu verändern. Alternativ können Linearaktoren 10 mit einem unterschiedlichen Hub verwendet werden, um unterschiedliche Auskragungen zu realisieren. Die kolbenseitige Befestigung der Linearaktoren 10 erfolgt bevorzugt mittels einer Schraubverbindung oder einer Bolzenverbindung, um eine Umpositionierung oder einen Austausch möglichst einfach zu gestalten.

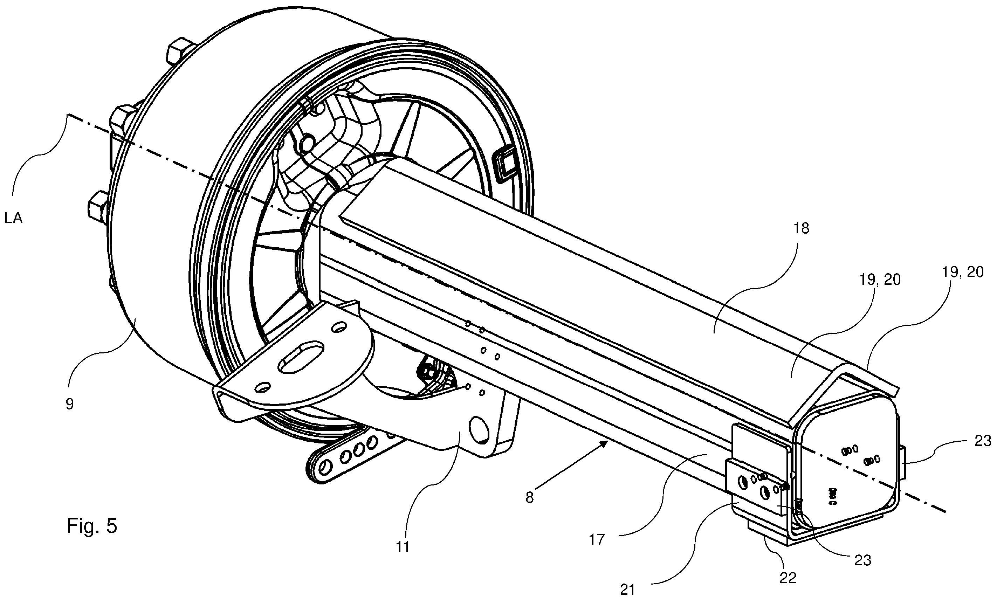

Die Darstellung in Fig. 5 zeigt eine perspektivische Ansicht eines der Achsstummel 8 der Radachse 5. Der jeweilige Achsstummel 8 weist einen Grundkörper 17 mit einem im Wesentlichen quaderförmigen Querschnitt auf. Der Grundkörper 17 ist bevorzugt als eine Schweißkonstruktion ausgeführt. Auf den Grundkörper 17 ist ein im Wesentlichen polygonförmiges oder bogenförmiges Profilbauteil 18 aufgeschweißt. Hier und vorzugsweise ist das Profilbauteil 18 im Wesentlichen dreieckförmig ausgeführt. Alternative Ausgestaltungen der Außenkontur, beispielsweise trapezförmig oder bogenförmig, sind ebenfalls denkbar. Ein im Wesentlichen U-förmiger Befestigungsabschnitt 21 umgreift den Achsstummel 8 abschnittsweise. An dem Befestigungsabschnitt 21 ist an dessen dem aufgeschweißten Profilbauteil 18 abgewandten Unterseite ein Gleitelement 22 lösbar befestigt, welches der gleitenden Lagerung des Achsstummels 8 im Achsrohr 7 dient. Bevorzugt ist der Befestigungsabschnitt 21 am freien Ende des Achsstummels 8, insbesondere im Wesentlichen bündig mit diesem abschließend, angeordnet. Weiterhin können an vertikalen Schenkeln des Befestigungsabschnittes 21 außenseitig weitere Gleitelemente 23, insbesondere lösbar, durch eine Schraubverbindung angeordnet sein. Insbesondere kann mittels der Schraubverbindung zugleich der Befestigungsabschnitt 21 an dem Achsstummel 8 befestigt sein.

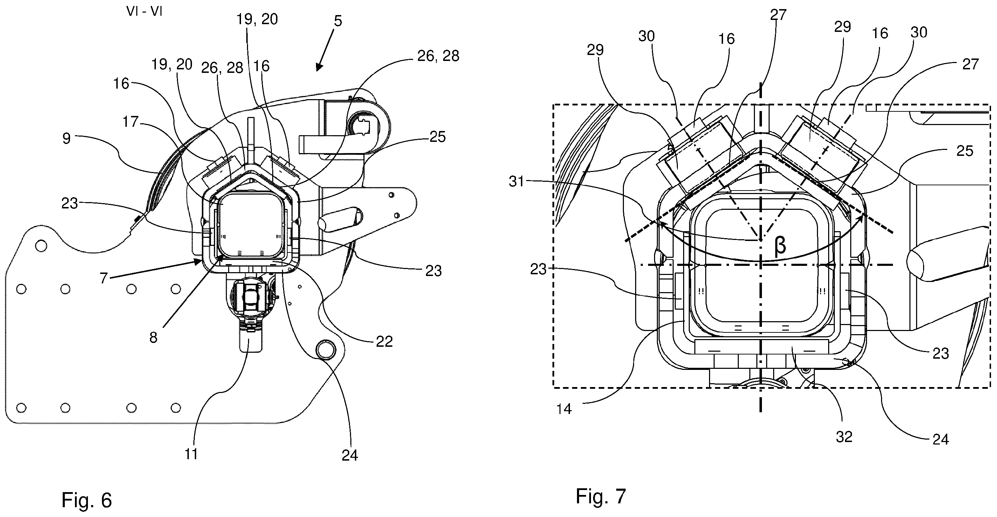

Fig. 6 stellt eine Schnittansicht entlang der Linie VI -VI gemäß Fig. 3 dar. In Fig. 7 ist eine vergrößerte Ansicht der Darstellung gemäß Fig. 6 dargestellt. Das Achsrohr 7 ist hier und vorzugsweise als mehrteilige Schweißkonstruktion ausgeführt, welche aus einer im Wesentlichen U-förmigen Wanne 24 und einem im Wesentlichen Aufsatz 25, der polygonförmig oder bogenförmig ausgebildet sein kann, besteht.

Im dargestellten Ausführungsbeispiel ist der Aufsatz 25 im Wesentlichen dreieckförmig ausgebildet. Somit weisen das Achsrohr 7 und der darin geführte Achsstummel 8 eine korrespondierende Form auf. Jeder Achsstummel 8 weist eine zumindest einseitig zentrierende Außenkontur mit Zentrierflächen 20 aufweist, die sich an Zentrierflächen 26 der korrespondierenden Innenkontur des Achsrohres 7 abstützen. An den Zentrierflächen 20 der Innenkontur des Achsrohres 7 sind Gleitelemente 27 angeordnet. Die Gleitelemente 27 sind dabei im Wesentlichen plattenförmig ausgeführt. Die plattenförmigen Gleitelemente 27 stützen sich an der korrespondierenden Zentrierfläche 20 des Achsstummels 8 ab. Bevorzugt können die Gleitelemente 27 aus einem Kunststoff, beispielsweise Polyamid, bestehen. Der Oberfläche des Profilbauteils 18 des Achsstummels 8 zugewandte Seitenflächen 28 des Aufsatzes 25 des Achsrohres 7 bilden die korrespondierenden Zentrierflächen 26 an der Innenkontur des Achsrohres 7. Die Zentrierflächen 20, 26 sind planparallel zueinander.

Insbesondere können sich zwei einander gegenüberliegende Seitenflächen 19. bzw. 28 der Außenkontur des Achsstummels 8 und der Innenkontur des Achsrohres 7, welche die jeweiligen Zentrierflächen 21 und 26 bilden, eine Neigung β aufweisen, die ungleich 90°, insbesondere größer 90°, ist.

Die an den Zentrierflächen 26 der Innenkontur des Achsrohres 7 angeordneten Gleitelemente 27 durch senkrecht zu den Zentrierflächen 26 orientierte Einstellmittel 16 einstellbar. Die Einstellmittel 16 sind bevorzugt als mit einem Außengewindeabschnitt versehene Stifte oder Bolzen ausgeführt, welche in auf der Außenseite des Achsrohres 7 angeordneten Innengewindeabschnitten 29 geführt sind.

Die an den Zentrierflächen 26 des Achsrohres 7 angeordneten Gleitelemente 27 sind entlang einer senkrecht zur Zentrierfläche 26 orientierten Einstellachse 30 verstellbar. Die Einstellachsen 30 weisen in gedachter Verlängerung einen gemeinsamen Schnittpunkt 31 auf, der im Wesentlichen in der Mitte des Achsrohres 7 liegt. Durch die senkrecht zur Zentrierfläche 26 orientierte Einstellachse 30 wird eine Einstellung der Position des Achsstummels 8 relativ zum umgebenden Achsrohr 7 zugleich in horizontaler als auch vertikaler Richtung bewirkt

Bedingt durch die korrespondierende Ausgestaltung des Achsrohres 7 und der darin geführten Achsstummels 8 liegen Mittellängsachsen von Achsrohr 7 und Achsstummeln 8 im Wesentlichen deckungsgleich übereinander.

Wie weiter aus Fig. 7 ersichtlich ist, ist an einer den Zentrierflächen 20 gegenüberliegenden Seite der Achsstummel 8 zumindest ein weiteres Gleitelement 32 innenseitig am Achsrohr 7 lösbar befestigt. Das weitere Gleitelement 32 ist dabei im Bereich der stirnseitigen Austrittsöffnung des Achsrohres 7 positioniert.

### Bezugszeichenliste

| | | | |
|---|---|---|---|
| 1 | Arbeitsmaschine | F | Fahrtrichtung |
| 2 | Maschinenrahmen | β | Neigungswinkel |
| 3 | Fahrwerk | | |
| 4 | Räder | | |
| 5 | Radachse | | |
| 6 | Feld | | |
| 7 | Achsrohr | | |
| 8 | Achsstummel | | |
| 9 | Radnabe | | |
| 10 | Linearaktor | | |
| 11 | Konsole | | |
| 12 | Konsole | | |
| 13 | Kolbengehäuse | | |
| 14 | Kolbenstange | | |
| 15 | Öffnung | | |
| 16 | Einstellmittel | | |
| 17 | Grundkörper | | |
| 18 | Profilbauteil | | |
| 19 | Seitenfläche | | |
| 20 | Zentrierfläche | | |
| 21 | Befestigungsabschnitt | | |
| 22 | Gleitelement | | |
| 23 | Gleitelement | | |
| 24 | Wanne | | |
| 25 | Aufsatz | | |
| 26 | Zentrierfläche | | |
| 27 | Gleitelement | | |
| 28 | Seitenfläche | | |
| 29 | Innengewindeabschnitt | | |
| 30 | Einstellachse | | |
| 31 | Schnittpunkt | | |
| 32 | Gleitelement | | |

## Patentansprüche

1. Landwirtschaftliche Arbeitsmaschine (1), insbesondere zur Anlage, Bearbeitung und Pflege von landwirtschaftlichen Reihenkulturen, umfassend einen Maschinenrahmen (2), an dem ein Fahrwerk (3) mit einer längenveränderlichen Radachse (5) befestigt ist, wobei die Radachse (5) ein Achsrohr (7) aufweist, in welchem endseitig angeordnete Achsstummel (8) mit daran angeordneten Radnaben (9) in axialer Richtung relativbeweglich geführt und gleitend gelagert sind, wobei zur Verstellung der Achsstummel (8) gegenüber dem Achsrohr (7) Linearaktoren (10) vorgesehen sind, wobei jeder Achsstummel (8) eine zumindest einseitig zentrierende Außenkontur mit Zentrierflächen (20) aufweist, die sich an Zentrierflächen (26) einer korrespondierenden Innenkontur des Achsrohres (7) abstützen, wobei an den Zentrierflächen (26) der Innenkontur des Achsrohres (7) Gleitelemente (32) angeordnet sind, **dadurch gekennzeichnet, dass** die an den Zentrierflächen (26) der Innenkontur des Achsrohres (7) angeordneten Gleitelemente (32) durch senkrecht zu den Zentrierflächen (26) bewegliche Einstellmittel (16) einstellbar sind.

2. Landwirtschaftliche Arbeitsmaschine (1) nach Anspruch 1, **dadurch gekennzeichnet, dass** die an den Zentrierflächen (26) des Achsrohres (7) angeordneten Gleitelemente (32) entlang einer weitgehend senkrecht zur Zentrierfläche (26) orientierten Einstellachse (30) verstellbar sind, wobei die Einstellachsen (31) in gedachter Verlängerung einen gemeinsamen Schnittpunkt (32) aufweisen, der im Wesentlichen in der Mitte des Achsrohres (7) liegt.

3. Landwirtschaftliche Arbeitsmaschine (1) nach Anspruch 1 oder 2, **dadurch gekennzeichnet, dass** die Innenkontur des Achsrohres (7) und die Außenkontur der Achsstummel (8) einen polygonalen und/oder einen bogenförmigen Querschnitt aufweisen, wobei sich zwei einander gegenüberliegende Seitenflächen (19, 28) der Außenkontur bzw. der Innenkontur, welche die jeweiligen Zentrierflächen (20, 26) bilden, eine Neigung (β) aufweisen, die zumindest 90°, insbesondere größer 90°, ist.

4. Landwirtschaftliche Arbeitsmaschine (1) nach einem der vorangehenden Ansprüche,
**dadurch gekennzeichnet, dass** die Innenkontur und die korrespondierende Außenkontur im Bereich der Zentrierflächen (20, 26) im Wesentlichen dreieckförmig, trapezförmig oder bogenförmig ausgebildet ist.

5. Landwirtschaftliche Arbeitsmaschine (1) nach einem der Ansprüche 1 bis 4, **dadurch gekennzeichnet, dass** Mittellängsachsen von Achsrohr (7) und Achsstummeln (8) im Wesentlichen deckungsgleich übereinander liegen.

6. Landwirtschaftliche Arbeitsmaschine (1) nach einem der Ansprüche 1 bis 5, **dadurch gekennzeichnet, dass** die Linearaktoren (10) als Hydraulikzylinder ausgeführt sind, welche außenseitig an dem Achsrohr (7) und dem jeweiligen Achsstummel (8) angeordnet sind.

7. Landwirtschaftliche Arbeitsmaschine (1) nach Anspruch 6, **dadurch gekennzeichnet, dass** die Linearaktoren (10) an der den Zentrierflächen (26) gegenüberliegenden Seite des Achsrohres (7) angeordnet sind.

8. Landwirtschaftliche Arbeitsmaschine (1) nach Anspruch 6 oder 7, **dadurch gekennzeichnet, dass** der jeweilige Linearaktor (10) mittels jeweils einer am Achsstummel (8) und am Achsrohr (7) angeordneten Konsole (11, 12) an diesen befestigt ist.

9. Landwirtschaftliche Arbeitsmaschine (1) nach einem der Ansprüche 6 bis 8, **dadurch gekennzeichnet, dass** genau eine Konsole (12) im Wesentlichen mittig an dem Achsrohr (7) angeordnet ist, an welcher beide Linearaktoren (10) befestigt sind.

10. Landwirtschaftliche Arbeitsmaschine (1) nach Anspruch 9, **dadurch gekennzeichnet, dass** die genau eine Konsole (12) als Lochleiste ausgeführt ist.

11. Landwirtschaftliche Arbeitsmaschine (1) nach einem der vorangehenden Ansprüche,
**dadurch gekennzeichnet, dass** an einer den Zentrierflächen (20) gegenüberliegenden Seite der Achsstummel (8) zumindest ein weiteres Gleitelement (22, 32) am Achsrohr (7) und/oder an dem Achsstummel (8) lösbar befestigt ist.

12. Landwirtschaftliche Arbeitsmaschine (1) nach Anspruch 11, **dadurch gekennzeichnet, dass** ein im Wesentlichen U-förmiger Befestigungsabschnitt (21) den Achsstummel (8) umgreift, an dessen dem Achsrohr (8) zugewandten Unterseite das weitere Gleitelement (22) lösbar befestigt ist.

13. Landwirtschaftliche Arbeitsmaschine (1) nach einem der vorangehenden Ansprüche, **dadurch gekennzeichnet, dass** die Linearaktoren (10) in ihrem axialen Verstellweg durch ein diesen zugeordnetes Begrenzungsmittel beschränkt sind.

14. Landwirtschaftliche Arbeitsmaschine (1) nach einem der vorangehenden Ansprüche,
**dadurch gekennzeichnet, dass** für ein symmetrisches Ausfahren der Linearaktoren (10) ein Zwangslauf vorgesehen ist, welcher insbesondere als gegenläufiges Hebel-Gestänge, als Zahnstange oder als hydraulischen Gleichlaufeinrichtung ausgebildet ist.

## Claims

1. Agricultural implement (1), in particular for the establishment, cultivation and maintenance of agricultural row crops, comprising a machine frame (2) to which a running gear (3) with a length-adjustable wheel axle (5) is attached, wherein the wheel axle (5) comprises an axle tube (7) in which axle stubs (8), arranged at the ends, with wheel hubs (9) mounted thereon, are guided so as to be movable relative to one another in the axial direction and are slidably mounted, wherein linear actuators (10) are provided for adjusting the position of the axle stubs (8) relative to the axle tube (7) linear actuators (10) are provided, wherein each axle stub (8) has an outer contour that centres on at least one side, with centring surfaces (20) that bear against centring surfaces (26) of a corresponding inner contour of the axle tube (7), wherein sliding elements (32) are arranged on the centring surfaces (26) of the inner contour of the axle tube (7) are arranged, **characterised in that** the sliding elements (32) arranged on the centring surfaces (26) of the inner contour of the axle tube (7) are adjustable by means of adjustment means (16) movable perpendicular to the centring surfaces (26).

2. Agricultural implement (1) according to claim 1, **characterised in that** the sliding elements (32) arranged on the centring surfaces (26) of the axle tube (7) are adjustable along an adjustment axis (30) oriented substantially perpendicular to the centring surface (26), wherein the adjustment axes (31), when extended imaginarily, have a common point of intersection (32) which lies essentially at the centre of the axle tube (7).

3. Agricultural implement (1) according to claim 1 or 2, **characterised in that** the inner contour of the axle tube (7) and the outer contour of the axle stubs (8) have a polygonal and/or arcuate cross-section, wherein two opposing side surfaces (19, 28) of the outer contour and the inner contour, respectively, which form the respective centring surfaces (20, 26), have an inclination (β) of at least 90°, in particular greater than 90°.

4. Agricultural implement (1) according to one of the preceding claims, **characterised in that** the inner contour and the corresponding outer contour in the region of the centring surfaces (20, 26) are essentially triangular, trapezoidal or arcuate in shape.

5. Agricultural implement (1) according to any one of claims 1 to 4, **characterised in that** the central longitudinal axes of the axle tube (7) and the axle stubs (8) lie substantially coincident one above the other.

6. Agricultural implement (1) according to any one of claims 1 to 5, **characterised in that** the linear actuators (10) are designed as hydraulic cylinders, which are arranged on the outer side of the axle tube (7) and the respective axle stub (8).

7. Agricultural implement (1) according to claim 6, **characterised in that** the linear actuators (10) are arranged on the side of the axle tube (7) opposite the centring surfaces (26).

8. Agricultural implement (1) according to claim 6 or 7, **characterised in that** each linear actuator (10) is secured to the axle stub (8) and the axle tube (7) by means of a bracket (11, 12) arranged on each of them.

9. Agricultural implement (1) according to any one of claims 6 to 8, **characterised in that** exactly one bracket (12) is arranged substantially centrally on the axle tube (7), to which both linear actuators (10) are secured.

10. Agricultural implement (1) according to claim 9, **characterised in that** the single bracket (12) is designed as a perforated strip.

11. An agricultural implement (1) according to one of the preceding claims, **characterised in that**, on a side of the axle stub (8) opposite the centring surfaces (20), at least one further sliding element (22, 32) is detachably secured to the axle tube (7) and/or to the axle stub (8).

12. Agricultural implement (1) according to claim 11, **characterised in that** a substantially U-shaped mounting section (21) surrounds the axle stub (8), to the underside of which, facing the axle tube (8), the further sliding element (22) is detachably secured.

13. Agricultural implement (1) according to one of the preceding claims, **characterised in that** the linear actuators (10) are limited in their axial travel by a limiting means associated therewith.

14. An agricultural implement (1) according to one of the preceding claims, **characterised in that**, to ensure symmetrical extension of the linear actuators (10) , a positive-drive mechanism is provided, which is designed in particular as a counter-rotating lever linkage, a rack and pinion or a hydraulic synchronisation device.

## Revendications

1. Machine agricole (1), destinée en particulier à la mise en place, au travail du sol et à l'entretien de cultures agricoles en rangs, comprenant un châssis (2) sur lequel est fixé un train de roulement (3) comportant un essieu (5) à longueur variable, l'essieu (5) comportant un tube d'essieu (7) dans lequel des tronçons d'essieu (8) disposés aux extrémités, sur lesquels sont montés des moyeux de roue (9), sont guidés de manière à pouvoir se déplacer axialement et sont montés sur des paliers lisses, des actionneurs linéaires (10) étant prévus pour le réglage des tronçons d'essieu (8) par rapport au tube d'essieu (7) des actionneurs linéaires (10) sont prévus, chaque tronçon d'essieu (8) présentant un contour extérieur à centrage au moins d'un côté avec des surfaces de centrage (20) qui s'appuient sur des surfaces de centrage (26) d'un contour intérieur correspondant du tube d'essieu (7), des éléments coulissants (32) étant disposés sur les surfaces de centrage (26) du contour intérieur du tube d'essieu (7) sont disposés des éléments coulissants (32), **caractérisée en ce que** les éléments coulissants (32) disposés au niveau des surfaces de centrage (26) du contour intérieur du tube d'essieu (7) sont réglables à l'aide de moyens de réglage (16) mobiles perpendiculairement aux surfaces de centrage (26).

2. Machine agricole (1) selon la revendication 1, **caractérisée en ce que** les éléments coulissants (32) disposés sur les surfaces de centrage (26) du tube d'essieu (7) sont réglables le long d'un axe de réglage (30) orienté sensiblement perpendiculairement à la surface de centrage (26), les axes de réglage (31) présentant, dans leur prolongement imaginaire, un point d'intersection commun (32) situé essentiellement au milieu du tube d'essieu (7).

3. Machine agricole (1) selon la revendication 1 ou 2, **caractérisée en ce que** le contour intérieur du tube d'essieu (7) et le contour extérieur des embouts d'essieu (8) présentent une section transversale polygonale et/ou en forme d'arc, deux faces latérales opposées (19, 28) du contour extérieur et du contour intérieur, qui forment respectivement les surfaces de centrage (20, 26), présentent une inclinaison (β) d'au moins 90°, en particulier supérieure à 90°.

4. Machine agricole (1) selon l'une des revendications précédentes, **caractérisée en ce que** le contour intérieur et le contour extérieur correspondant, au niveau des surfaces de centrage (20, 26), sont essentiellement de forme triangulaire, trapézoïdale ou arquée.

5. Machine agricole (1) selon l'une des revendications 1 à 4, **caractérisée en ce que** les axes longitudinaux centraux du tube d'essieu (7) et des embouts d'essieu (8) sont superposés de manière sensiblement coïncidente.

6. Machine agricole (1) selon l'une des revendications 1 à 5, **caractérisée en ce que** les actionneurs linéaires (10) sont réalisés sous forme de vérins hydrauliques, qui sont disposés à l'extérieur sur le tube d'essieu (7) et sur chaque bout d'essieu (8).

7. Machine agricole (1) selon la revendication 6, **caractérisée en ce que** les actionneurs linéaires (10) sont disposés sur le côté du tube d'essieu (7) opposé aux surfaces de centrage (26).

8. Machine agricole (1) selon la revendication 6 ou 7, **caractérisée en ce que** chaque actionneur linéaire (10) est fixé au tronc d'essieu (8) et au tube d'essieu (7) au moyen d'une console (11, 12) disposée respectivement sur chacun d'eux.

9. Machine agricole (1) selon l'une des revendications 6 à 8, **caractérisée en ce qu'**exactement une console (12) est disposée sensiblement au centre du tube d'essieu (7), à laquelle les deux actionneurs linéaires (10) sont fixés.

10. Machine agricole (1) selon la revendication 9, **caractérisée en ce que** ladite unique console (12) est réalisée sous la forme d'une barre perforée.

11. Machine agricole (1) selon l'une des revendications précédentes, **caractérisée en ce que**, sur un côté du bout d'essieu (8) opposé aux surfaces de centrage (20), au moins un autre élément coulissant (22, 32) est fixé de manière amovible au tube d'essieu (7) et/ou au bout d'essieu (8).

12. Machine agricole (1) selon la revendication 11, **caractérisée en ce qu'**une partie de fixation (21) sensiblement en forme de U entoure le bout d'essieu (8), sur la face inférieure duquel, tournée vers le tube d'essieu (8), est fixé de manière amovible l'autre élément coulissant (22).

13. Machine agricole (1) selon l'une des revendications précédentes, **caractérisée en ce que** la course de réglage axiale des actionneurs linéaires (10) est limitée par un moyen de limitation qui leur est associé.

14. Machine agricole (1) selon l'une des revendications précédentes, **caractérisée en ce que**, pour assurer une extension symétrique des actionneurs linéaires (10) , il est prévu un mécanisme de synchronisation, qui est notamment réalisé sous la forme d'une tringlerie à leviers opposés, d'une crémaillère ou d'un dispositif hydraulique de synchronisation.
